# EUROPEAN PATENT SPECIFICATION

(11) **EP 4 132 763 B1**
(45) Date of publication and mention of the grant of the patent: **19.06.2024**
(21) Application number: 21717560.3
(22) Date of filing: 08.04.2021
(51) Int. Cl.: B29C 45/76, B29C 49/80, G01N 21/90, G01N 21/89

(54) **DEVICE AND METHOD FOR INSPECTING PARISONS**
VORRICHTUNG UND VERFAHREN ZUR PRÜFUNG VON VORFORMLINGEN
DISPOSITIF ET PROCEDE D'INSPECTION DE PREFORMES

(30) Priority: 09.04.2020 IT 202000007672
(43) Date of publication of application: 15.02.2023
(73) Proprietor: SACMI COOPERATIVA MECCANICI IMOLA SOCIETA' COOPERATIVA, 40026 Imola (IT)
(72) Inventor: LAICO, Donato, 40026 Imola (Bologna) (IT); SCALINI, Cristian, 48018 Faenza (Ravenna) (IT)
(74) Representative: Conti, Marco
(86) International application number: PCT/IB2021/052919
(87) International publication number: WO 2021/205377

(56) References cited:
- EP-A1- 2 976 204
- WO-A1-2017/075403
- US-A1- 2017 129 157
- US-A1- 2020 013 819
- Anonymous: "Analyze The Defects In Preforms Under Polarized Light With Polariscope | Testing Equipments", , 2 June 2017 (2017-06-02), XP055719609, Retrieved from the Internet: URL:https://www.prestogroup.com/articles/a nalyze-the-defects-in-preforms-under-polar ized-light-with-polariscope/ [retrieved on 2020-08-03] & Anonymous: "Articles | Testing Equipments", , 3 August 2020 (2020-08-03), XP055719611, Retrieved from the Internet: URL:https://www.prestogroup.com/articles/ [retrieved on 2020-08-03] & Unknown: "Polariscope Strain Viewer -Deluxe Top View Side View Front View Standard Test Template Feather Touch Buttons LCD Display", , 2 June 2017 (2017-06-02), XP055719616, Retrieved from the Internet: URL:https://www.prestogroup.com/uploads/pr oduct-pdf/867127790.Polariscope%20Strain%2 0Viewer%20-%20Deluxe%20with%20LCD%20displa y.pdf [retrieved on 2020-08-03]

## Description

### Technical field

This invention relates to an apparatus and a method for the inspection of parisons.

### Background art

In the field of parison inspection, the inspection machines traditionally used are machines which receive the parisons one by one in orderly succession, such as, for example, the machine described in patent document EP3286553A1 in the name of the present Applicant and the one described in patent document US2017/1291257A. Moreover, patent document WO2017/075403A1 discloses a method wherein a preform or a bottle is inspected; also in this case, the preform or the bottle which is subject to inspection is positioned according to a predefined orientation. Usually, however, the parisons which leave the forming machine are not arranged in orderly fashion; this has therefore given rise to the need to inspect the parisons without having to arrange them one by one in orderly fashion but allowing them to remain in an unordered flow. Patent documents EP2976204B1 and DE102016118670A1 disclose inspection machines configured to inspect an unordered flow of parisons. These machines have inherent limitations regarding the effectiveness and reliability of inspection. The fact that the parisons are unordered means that the images captured are more difficult to process to identify possible defects. There is therefore a need to improve the effectiveness of inspection of an unordered flow of parisons. More specifically, there is a need to achieve a good level of reliability in identifying internal defects of the material the parisons are made of, such as irregular residual stresses in the polymer chains of the PET.

### Disclosure of the invention

This aim is fully achieved by the apparatus and method of this disclosure as characterized in the appended claims.

More specifically, this disclosure relates to an apparatus (or device) and a method for the inspection of parisons or other plastic objects (such as caps or lids, for example); in this regard, it should be noted that the rest of this description is made with reference to parisons but is also applicable to other objects made of plastic material. The term "parison" (also called "preform") is used to denote an intermediate product in the process for the production of plastic containers such as, for example, beverage bottles. More specifically, parisons are formed by moulding the plastic material (typically injection or compression moulding) and, at a later stage, are expanded by blow-moulding to produce the finished containers. Parisons are made of plastic material, preferably PET (polyethylene terephthalate). The apparatus for the optical inspection of parisons according to this disclosure includes an inspection zone (or inspection site or inspection position); the inspection zone is configured to receive a plurality of parisons. The parisons received in the inspection zone are an unordered plurality of parisons. By unordered plurality of parisons is meant an unordered (or disordered) flow of parisons. In other words, the parisons are received in the inspection zone in bulk. Thus, the parisons of the plurality are received in the inspection zone all together. That means the parisons of the plurality each have its axis oriented in a random direction, which may differ from one parison to another.

The apparatus for optical inspection of parisons according to this disclosure includes an illuminator. The illuminator includes a light source configured to emit a beam of light directed at the plurality of parisons located in the inspection zone.

The apparatus comprises a detector. The detector includes a camera. The camera (that is, the detector) is configured to capture an image of the plurality of parisons located in the inspection zone.

In an embodiment, the light source is configured to emit the light beam continuously. In an embodiment, the light source is stroboscopic and is configured to emit the light beam at predetermined emission intervals (each emission interval corresponds to the time taken to feed a parison to the inspection position).

In an embodiment, the camera is configured to capture the image at predetermined capture intervals (each capture interval corresponds to the time taken to feed a parison to the inspection position); if the light source is stroboscopic, the emission intervals correspond to (that is, are equal to) the capture intervals.

The inspection zone is interposed between the illuminator and the detector. Thus, in the inspection zone, the plurality of parisons is operatively interposed between the illuminator and the detector. That way, the illuminator lights the parisons from a first side (for example, from the front), while the detector captures an image of the parisons from a second side, opposite to the first (for example, from the back); the detector thus captures a backlit image of the parison (that is, against the light).

In an embodiment, the light source is configured to emit green light (that is, whose wavelength is in the green field). In another embodiment, the light source is configured to emit white light (that is, whose wavelength is in the white field).

The apparatus comprises a control unit. The control unit is configured to process the image captured by the camera to derive an item of diagnostic information regarding the defectiveness of one or more parisons of the plurality of parisons. The defects may include: irregular thickness, holes, blisters or extraneous bodies, irregular residual stresses in the polymer chains of the PET. It should be noted that the item of diagnostic information may be used to reject defective parisons, if any, and/or to provide statistical data.

In an embodiment, the image is processed according to the processing method described in Italian patent application 102018000011107 in the name of the present Applicant. It is expressly understood that all the features of the method and apparatus of Italian patent application 102018000011107 can be applied to the apparatus and method of this embodiment. In particular, processing may be carried out by neural networks. Processing may include the following steps: processing the image captured on the basis of reference data, in order to derive values of a plurality of image features from the image; generating an image reconstructed from the values of the plurality of image features and based on the reference data; deriving the item of diagnostic information as a function of a comparison between the image captured and the reconstructed image. Processing may also include a step of self-learning, based on a plurality of images representing parisons that are free of defects.

In another embodiment, the control unit processes the images by comparing them with the images representing the defective parisons.

According to the invention, the illuminator includes an emission-polarizing filter (or first polarizing filter). The emission-polarizing filter is configured to intercept the light beam emitted by the light source. The emission-polarizing filter is configured to generate a corresponding polarized light beam from the light beam emitted by the light source.

Further, the detector includes a receiving polarizing filter (or second polarizing filter).

Preferably, at the inspection position, the parison is operatively interposed between the emission-polarizing filter and the receiving polarizing filter. The receiving polarizing filter is configured to receive the polarized light beam. More specifically, the receiving polarizing filter is configured to receive the beam of light polarized by the emission-polarizing filter and refracted by the parisons and to generate a second polarized light beam. The camera thus receives the second polarized light beam.

According to the invention, the first polarizing filter (or emission filter) is a circular polarizing filter. By circular polarizing filter is meant a polarizer that filters light in the same way in all directions. Thus, the polarized light from the first polarizing filter illuminates the parisons invariantly relative to their orientation (which is random and may vary from one parison to another).

In another embodiment, the first polarizing filter is a linear filter.

Preferably, the receiving polarizing filter includes (at least) one first linear polarizing filter portion, having a first polarizing direction and a second linear polarizing filter portion, having a second polarizing direction, different from the first polarizing direction. More generally speaking, the receiving polarizing filter includes a plurality of linear filter portions, each having a respective polarizing direction, different from the others. More specifically, the receiving polarizing filter includes four linear filter portions angularly spaced at 45° from each other.

In an embodiment, the detector comprises a plurality of cameras; more specifically, for each receiving polarizing filter portion, the detector comprises a corresponding camera. Each camera views the parisons filtered through the respective receiving polarizing filter portion; that is to say, each receiving polarizing filter portion is located on the optical path of the corresponding camera (and off the optical path of the other cameras) between the corresponding camera and the inspection zone. More specifically, the detector includes four cameras and the receiving polarizing filter includes four linear filter portions having respective polarizing directions angularly spaced at 45° from each other.

In an embodiment, the receiving polarizing filter is integrated in the camera.

The detector includes at least one imaging device. The imaging device constitutes a polarization image sensor. In an example embodiment, the detector might include a plurality of imaging devices; for example, each camera might include a corresponding imaging device.

Preferably, the imaging device is a solid-state imaging device. For example, the solid-state imaging device comprises a plurality of polarizers (for example, from two to eight, preferably four) mounted on a chip and having different polarizing directions; the solid-state imaging device also comprises a plurality of photoelectric converter sections having light receiving regions for receiving the light transmitted through the polarizers, where the light receiving regions are symmetrical.

In an example embodiment, the camera (or each camera of the plurality of cameras) is an electronic appliance comprising the solid-state imaging device.

For example, the imaging device might be of the type described in patent document US2020/0013819A1. It is expressly understood that all the features of the imaging device of patent document US2020/0013819A1 can be applied to the detector of this embodiment.

More specifically, in this embodiment, the receiving polarizing filter includes a plurality of units (or chips) and, for each unit, a first and a second linear polarizing filter portion having the first and the second polarizing direction, respectively. In other words, the receiving polarizing filter includes, for each unit, a respective plurality of linear polarizing filter portions, each having a respective polarizing direction, which is different from the others. More specifically, for each unit, the receiving polarizing filter includes four portions having respective polarizing directions angularly spaced at 45° from each other (for example: 0 °, 45 °, 90 °, 135 °).

For each linear polarizing filter portion, the camera includes a photoelectric converter section. Thus, the camera includes a plurality of photoelectric converter sections. The plurality of photoelectric converter sections are symmetrical. Preferably, each unit defines (or corresponds to) one pixel. In an embodiment, each photoelectric converter section defines one pixel. Preferably, each photoelectric converter section includes a pair of photodiodes.

Thus, for each snap, the camera (or the plurality of cameras) captures a plurality of images (each filtered by a respective linear filter portion). For example, it captures four images. The control unit is configured to process the images to derive a single image which is then used to identify any defects. More specifically, the control unit processes the images (for example, the four images), and chooses the one or more which best depict the parisons and, if necessary, (when more than one image is chosen), combining them with each other. Preferably, for each parison of the plurality, the control unit chooses one image or combines two or more images (for example, as a function of the orientation of the parison).

Thus the image captured by the camera (or the detector) or by the plurality of cameras) depicts the plurality of parisons; the control unit is configured to derive, from the captured image, a plurality of derived images, each representing a respective parison of the plurality of parisons and to process each derived image of the plurality of derived images in order to generate the item of diagnostic information. More specifically, it should be noted that the snapshot taken by the camera depicts the plurality of parisons all together; this snapshot in turn includes a plurality of images (for example, four images) depicting the plurality of parisons viewed (all together) through different polarizing filter portions; thus, the plurality of images (for example, four images) is processed to generate, for each parison, a respective image which is then used to identify defects. The respective image that is generated for each parison may be one of the images included in the snapshot or a combination of two or more images of the snapshot. In effect, from each snapshot, the control unit generates a plurality of images: one for each parison. The image that is generated to analyse each parison depicts the parison invariantly with regard to both the orientation of the parison and the polarization.

Preferably, the apparatus comprises a conveyor. The conveyor is configured to receive the parisons of the plurality. The conveyor is configured to transport the parisons to the inspection zone in unordered fashion. Thus, the conveyor transports the plurality of parisons all together. Preferably, the conveyor receives the unordered parisons and keeps them unordered as it transports them. Preferably, the conveyor transports the unordered (or disordered) flow of parisons to the inspection zone. In an embodiment, the conveyor is configured to transport the parisons along a curved path at a constant height.

In an embodiment, the inspection zone is defined along the conveyor. More specifically, the conveyor includes an at least partly transparent surface configured to supportably receive the plurality of parisons. The light source may be disposed under the conveyor to illuminate the parisons from below through the at least partly transparent surface. The detector may be disposed above, or next to, the conveyor to capture images of the parisons resting on the conveyor; thus, the images are captured against the light.

The conveyor may include a (rotary) carousel. Thus, the parisons may be inspected while supported in an unordered fashion on the carousel. More specifically, the carousel includes a rotary plate defining the at least partly transparent surface. The plate may be made of glass for example.

Located along the carousel is a receiving zone where the parisons are placed on the carousel (that is, the zone where the carousel receives them); the inspection zone is also located on the carousel; also located along the carousel is a release zone where the parisons are released from the carousel and, for example, allowed to drop onto another conveyor or into a collection container. The apparatus may include an abutment member, positioned in the release zone (at a fixed position) to stop the parisons and guide them out of the carousel. The apparatus may include a blower, positioned in the release zone, for blowing the parisons off the carousel.

The receiving zone, the inspection zone and the release zone are angularly spaced from each other. In effect, the parisons are placed on the carousel in a first angular sector of the carousel, inspected in a second angular sector of it and released from a third angular sector of it; as it moves, the carousel transports the parisons from the receiving zone to the inspection zone and from there to the release zone. It should be noted, therefore, that the detector and the illuminator are preferably fixed relative to the carousel which rotates.

It should also be noted that the camera (and also the additional camera) captures a sequence of images; the control unit is programmed in such a way that the time which elapses between capturing one image and capturing the next image is proportional to the feed speed of the conveyor (specifically, in this embodiment, the rotation speed of the carousel).

The carousel includes a frame. The plate may be mounted on the frame. In an embodiment, the carousel includes a plurality of at least partly transparent plates, mounted on the frame and defining the at least partly transparent surface. More specifically, the plates may have the shape of circular sectors juxtaposed with each other. The sectors extend outwards from an axis of rotation of the carousel (preferably as far as an outer edge thereof). The plurality of sector shaped plates has the advantage of being more manageable than a single plate: for example, if one sector breaks or is damaged, only that sector need be replaced.

Each plate may be planar or, more preferably, concave, so as to urge the parisons towards the central zone of the plate, thereby preventing the parisons from stopping between two adjacent plates, that is to say, astride the two plates. In effect, images captured in the boundary zone might be difficult to process on account of the border line between one plate and the other.

The carousel may also include, between one sector and another, a separating wall extending upwards from the plates (the wall is thus parallel to the axis of rotation of the carousel); the separating wall serves to prevent the parisons from settling on two adjacent plates (that is to say, astride two sectors). Further, above the carousel, between the receiving zone where the parisons are placed on the carousel and the inspection zone where they are inspected, the apparatus may also include a brush, used to brush off any parisons that may have stopped on the wall.

It should be noted that this disclosure provides the solution for inspecting the parisons on a rotary carousel even in the case where the illuminator does not include an emission-polarizing filter and the detector does not include a receiving polarizing filter. In other words, the solution with a carousel could be useful even in the case where the parisons are inspected with natural light, without the inspection zone being illuminated with polarized light.

The conveyor may be configured to convey the plurality of parisons into a collection container. In an embodiment, the camera (or the detector) is configured to capture images of the parisons as soon as they are released from the conveyor, so the inspection zone is defined between the conveyor and the collection container (that is, downstream of the conveyor and upstream of the collection container). More specifically, the parisons may be inspected as they drop off or slide down a chute from the conveyor into the collection container. Downstream of the conveyor, the apparatus may also include an additional conveyor, so the parisons may be inspected as they drop off or slide down a chute from the conveyor onto the additional conveyor.

It should also be noted that the camera (and also the additional camera) captures a sequence of images; in this embodiment, the control unit is programmed in such a way that the time which elapses between capturing one image and capturing the next image is proportional to the average speed at which the parisons drop.

In an embodiment, the apparatus comprises a container having an at least partly transparent bottom. The container is configured to receive the plurality of parisons; the container is positionable (for example, manually by an operator) at an operating position between the detector and the illuminator. Thus, at the operating position, the plurality of parisons inside the container are operatively interposed between the emission-polarizing filter and the receiving polarizing filter. At the operating position, the illuminator illuminates the parisons inside the container and the detector captures images of them (against the light); preferably, the illuminator is positioned under the bottom of the container and the detector is positioned above the container. It should be noted that the container might be substituted by an at least partly transparent plate on which the parisons rest.

It should be noted that in one of the embodiments of the invention, the apparatus comprises an additional inspection zone, configured to receive the unordered plurality of parisons. The additional inspection zone is positioned upstream or downstream of the inspection zone. In the case where the apparatus includes the conveyor, the additional inspection zone may be defined along the conveyor itself.

The apparatus may comprise an additional light source configured to emit a beam of light directed at the plurality of parisons located in the additional inspection zone. The additional light source defines an additional illuminator. It should be noted that the additional illuminator is not provided with polarizing filters. Thus, the additional illuminator is configured to emit "ordinary" non-polarized light.

It should also be noted that the light source and the additional light source might coincide: in effect, a solution is imaginable where a single light source illuminates both the inspection zone and the additional inspection zone and where the emission-polarizing filter is positioned between the inspection zone and the light source to intercept the rays emitted by the light source and directed at the inspection zone (but not the rays emitted by the light source and directed at the additional inspection zone).

The apparatus may comprise an additional camera configured to capture an additional image of the plurality of parisons located in the additional inspection zone. The plurality of parisons in the additional inspection zone is operatively positioned between the additional light source and the additional camera. The additional camera defines an additional detector. It should be noted that the additional illuminator is not provided with polarizing filters.

The control unit is configured to process the additional image captured by the additional camera to derive an item of diagnostic information regarding a colour quality of the one or more parisons. Thus it should be noted that polarized light is used in the inspection station to detect defects (in the body and/or in the neck) of the parisons, such as, for example: irregular thickness, holes, blisters or extraneous bodies, irregular residual stresses in the polymer chains of the PET. Ordinary light is used in the additional inspection station to detect defects (in the body and/or in the neck) of the parisons, such as, for example, colour defects.

This disclosure also provides a method for the inspection of parisons.

The method comprises a step of receiving an unordered plurality of parisons in an inspection zone.

The method comprises a step of illuminating the parisons of the plurality of parisons (through an illuminator including a light source).

The method comprises a step of capturing an image of the plurality of illuminated parisons in the inspection zone (through an imaging detector including a camera).

The method comprises a step of processing the image captured by the camera to derive an item of diagnostic information regarding the defectiveness of one or more parisons of the plurality of parisons. According to an aspect of this disclosure, the parisons of the plurality of parisons in the inspection zone are illuminated with a beam of polarized light.

More specifically, the beam of polarized light is generated by an emission-polarizing filter associated with the light source, that is, with the illuminator. Further, the beam of polarized light is received by a receiving polarizing filter associated with the camera: that is, with the detector. Thus, the camera receives the beam of light emitted by the light source and filtered by the emission-polarizing filter and by the receiving polarizing filter. Thus, illuminating includes the following sub-steps: generating a beam of non-polarized light by a light source; intercepting the beam of light on an emission-polarizing filter, interposed between the light source and the plurality of parisons; receiving the beam of polarized light on a receiving polarizing filter, interposed between the plurality of parisons and the camera. Preferably, in the inspection zone, the plurality of parisons is operatively interposed between the emission-polarizing filter and the receiving polarizing filter.

It should be noted that, preferably, the emission-polarizing filter is a circular polarizing filter and/or the receiving polarizing filter includes a plurality of units and, for each unit of the plurality of units, a respective plurality of linear polarizing filter portions, each having a respective polarizing direction, which is different from the others.

In an embodiment, the method comprises a step of transporting the plurality of parisons on a conveyor having an at least partly transparent surface; the inspection zone is preferably defined along the conveyor, so the parisons are inspected while they are being transported by the conveyor.

In particular, during inspection, the parisons are transported along a curved path at a constant height. In an embodiment, the path is defined along a circular trajectory. The parisons are transported along the curved path by a rotary carousel defining the at least partly transparent surface. This disclosure also provides a line, comprising a forming machine, which forms the parisons, and an inspection apparatus according to one or more aspects of this disclosure. In an embodiment, the forming machine is configured to form the parisons by injection moulding; in an embodiment, the forming machine is configured to form the parisons by compression moulding.

### Brief description of drawings

These and other features will become more apparent from the following detailed description of a preferred embodiment, illustrated by way of nonlimiting example in the accompanying drawings, in which:

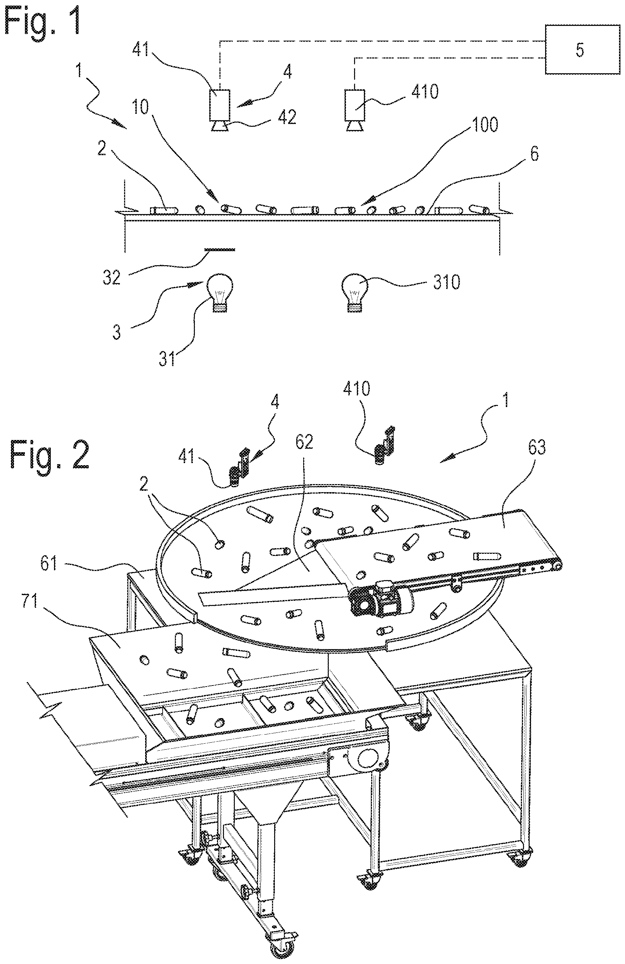

- Figure 1 schematically illustrates an optical inspection apparatus according to this disclosure;
- Figure 2 shows a possible embodiment of the optical inspection apparatus of Figure 1;

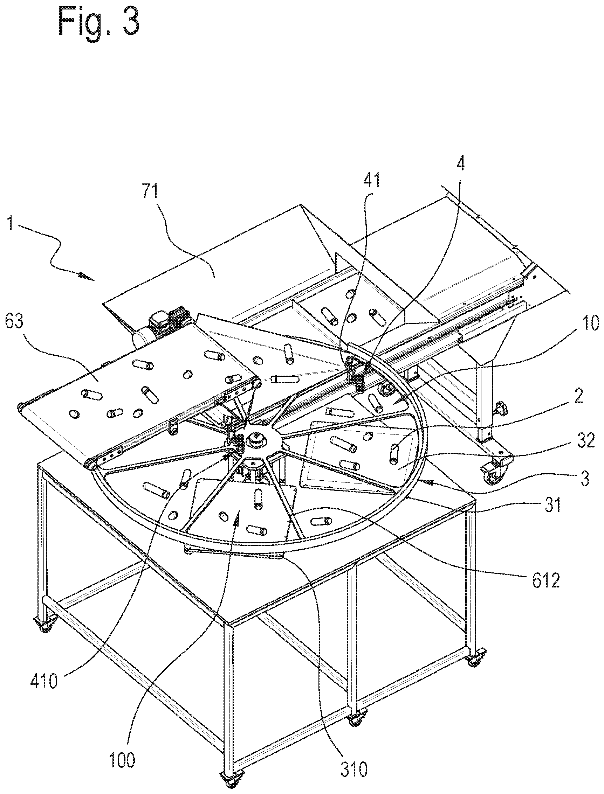

- Figure 3 shows a possible embodiment of the optical inspection apparatus of Figure 1;

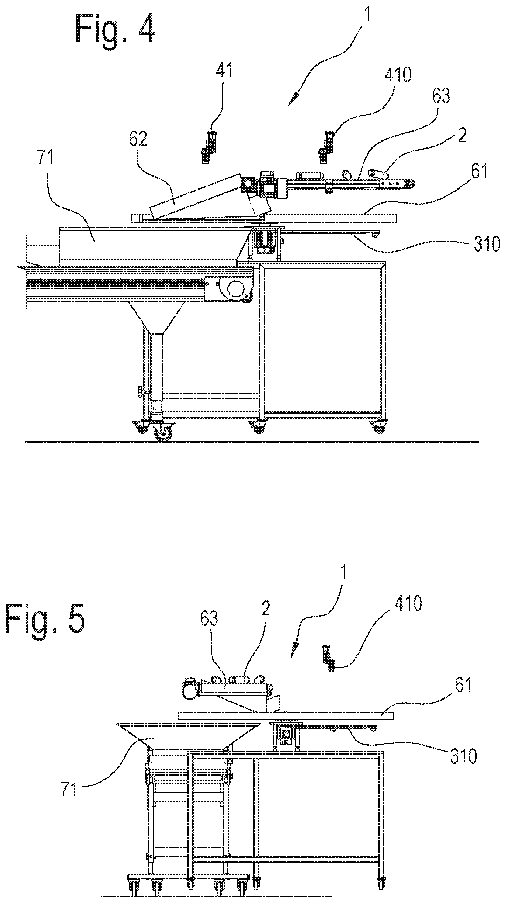

- Figures 4 and 5 show the apparatus according to the embodiment of Figure 2 or of Figure 3 in respective side views;

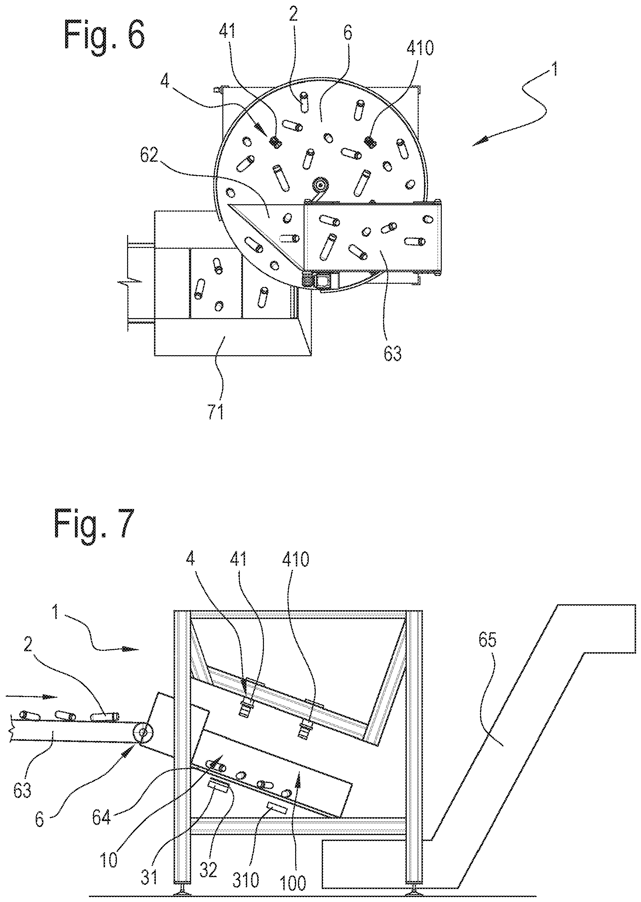

- Figure 6 shows the apparatus according to the embodiment of Figure 2 in a top view;
- Figure 7 shows a possible embodiment of the optical inspection apparatus of Figure 1;

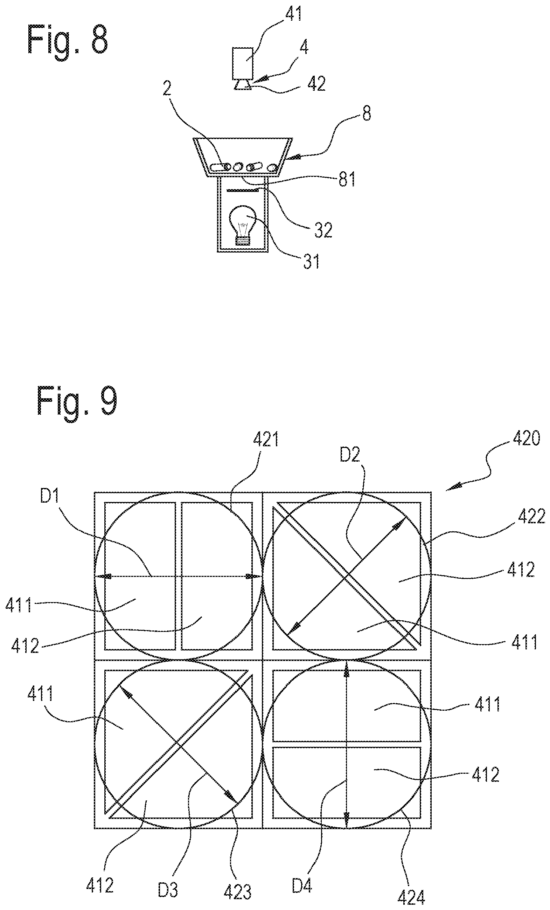

- Figure 8 shows a possible embodiment of the optical inspection apparatus of Figure 1;
- Figure 9 shows a detail of the optical inspection apparatus of Figure 1.

### Detailed description of preferred embodiments of the invention

With reference to the accompanying drawings, the numeral 1 denotes an apparatus for optical inspection of parisons (or, more generally speaking, of objects) 2. The apparatus 1 comprises an inspection zone 10, configured to receive an unordered plurality of parisons 2 (or flow of parisons 2). It should be noted that the apparatus 1 is configured to receive the parisons 2 from a forming machine in which the parisons are formed.

The apparatus 1 comprises an illuminator 3. The illuminator 3 includes a light source 31. The light source 31 is configured to emit a beam of light directed at the inspection zone 31. The illuminator 3 includes an emission-polarizing filter 32. The emission-polarizing filter 32 is interposed between the light source 31 and the inspection zone 10 to intercept the light beam emitted by the light source 31. The emission-polarizing filter 32 is a circular filter, configured to polarize the light in a plurality of directions (that is, in all directions).

The apparatus 1 comprises a detector 4. The detector 4 comprises a camera 41. The camera 41 is configured to capture an image of the unordered plurality parisons 2 positioned in the inspection zone 10. The inspection zone 10 is located between the illuminator 3 and the detector 4, so that the image of the parison captured is backlit (that is, against the light). The detector 4 also includes a receiving polarizing filter 42, interposed between the camera 41 and the inspection zone 10. Thus, the beam of light emitted by the light source 31 is filtered by the emission-polarizing filter 32, by the parisons 2 and by the receiving polarizing filter 42.

Preferably, the camera 41 and the receiving polarizing filter 42 are integrated with each other inside the detector 4; the detector 4 therefore defines a solid-state imaging device. More specifically, the receiving polarizing filter 42 includes a plurality of units 420, each of which includes a plurality of linear polarizing filter portions: a first portion 421, a second portion 422, a third portion 423 and fourth portion 424. The first portion 421 is configured to polarize the light in a first direction D1. The second portion 422 is configured to polarize the light in a second direction D2. The third portion 423 is configured to polarize the light in a third direction D3. The fourth portion 424 is configured to polarize the light in a fourth direction D4. The first, second, third and fourth polarizing directions D1, D2, D3 and D4 are different from each other. More specifically, the second direction D2 is inclined at 45° relative to the first direction D1. The fourth direction D4 is inclined at 45° relative to the second direction D2. The third direction D3 is inclined at 45° relative to the fourth direction D4. It should be noted that each polarizing filter portion 421, 422, 423, 424 may be shaped like a flat lens or like a hemispherical lens.

For each linear polarizing filter portion 421, 422, 423, 424, the camera 41 includes a photoelectric converter section; the photoelectric converter section is symmetrical. Preferably, the photoelectric converter section includes a pair of photodiodes 411, 412. Preferably, the photoelectric converter section may include more than one pair of photodiodes 411,412.

Thus, for each polarizing filter portion 421, 422, 423, 424, the camera 41 includes at least a first photodiode 411 and a second photodiode 412.

The apparatus 1 comprises an additional inspection zone 100. The additional inspection zone 100 is configured to receive the unordered plurality (or flow) of parisons 2, upstream or downstream of the inspection zone 10. The apparatus 1 comprises an additional light source 310 configured to emit a beam of light directed at the additional inspection zone 100. The apparatus 1 comprises an additional camera 410 configured to capture images of the plurality of parisons 2 located in the additional inspection zone 100. The additional camera 410 is not provided with polarizing filters. The additional light source 310 is not provided with polarizing filters.

The apparatus 1 comprises a control unit 5. The control unit 5 is connected to the camera 41 to receive the images captured by the camera. The control unit 5 is connected to the additional camera 410 to receive the images captured by the camera. The control unit 5 is configured to process the images received from the camera 41 and/or from the additional camera 410 to derive an item of diagnostic information regarding any defects of one or more of the parisons 2. More specifically, from the images captured by the camera 41, the control unit 5 derives defects in the body and thread of the parisons 2, such as shape irregularities or abnormal stresses in the material; from the images captured by the additional camera 410, the control unit 5 derives defects in the colour of the parisons 2.

In an embodiment, the apparatus 1 comprises a conveyor 6. The conveyor 6 is configured to receive the parisons 2 and to convey them in unordered fashion to the inspection zone 10 and/or to the additional inspection zone 100.

More specifically, in an embodiment, the conveyor 6 is configured feed the parisons 2 along a path; the inspection zone 10 and/or the additional inspection zone 100 are positioned along that path. In an embodiment, the conveyor 6 itself advances along the path with the parisons 2 supported thereon. The conveyor 6 may move continuously or intermittently, with periods of movement alternated with periods of stopping.

It should be noted that the surface of the conveyor 6 is configured to supportably receive the parisons 2 and is at least partly transparent, so that the illuminator 3 can be mounted on a first side of the conveyor 6 and the detector 4 can be mounted on a second side of the conveyor 6, opposite the first side, to capture images of the parisons 2 against the light.

In an embodiment not illustrated, the conveyor 6 could be a partly transparent belt (made of transparent rubber, for example). The belt may include elongate features (that is, grooves) configured to urge the parisons 2 to be oriented along a certain direction. In the latter case, the parisons 2 are received on the belt in unordered fashion but are subsequently (at least partly) ordered. The belt may advance downwardly (that is to say, it receives the parisons at a first point, at a first vertical height, and releases them at a second point, at a second vertical height, lower than the first height), upwardly (that is to say, it receives the parisons at a first point, at a first vertical height, and releases them at a second point, at a second vertical height, higher than the first height) or at a constant height. The inspection zone could be defined along the belt or downstream of it (that is, the parisons 2 could be inspected the moment they drop off the belt).

Whatever the case, the parisons are intercepted and transported without necessarily being singulated or spaced in any particular manner, which means the flow of parisons remains unordered.

In the example embodiment in which the conveyor (belt or other) moves the parisons upwards - that is, from a lower level to a higher level - inspection (through polarized light) occurs while the parisons are moving upwards; in this example, the conveyor also includes abutment members (preferably transparent). The abutment members may be disposed transversely or obliquely to a conveying (feeding) direction of the conveyor. The abutment members are configured to intercept the parisons to make it easier for them to be transported upwards; the abutment members may also be configured to interact with the parisons (thanks to the fact that the abutment members move as one with the conveyor) in order to orient them along a predetermined direction (for example, parallel to the feed direction). In this case, linear polarization could be sufficient, without necessarily using circular polarization.

In another embodiment, not illustrated, the conveyor 6 could include a plurality of panels, made of glass, Plexiglas or other transparent material, which move on a chain conveyor.

In an embodiment, the conveyor 6 comprises a rotary carousel 61. The carousel 61 includes a frame 612 and at least one transparent (or partly transparent) plate 611 mounted on the frame 612. The parisons 2 are supported in unordered fashion on the at least one plate 611.

More specifically, in an embodiment, the carousel 61 includes a single plate 611, having the shape of a disc (and thus extending for 360° on the carousel 61). In another embodiment, the carousel 61 includes a plurality of plates 611, each of which occupies an angular sector of the carousel 61.

The apparatus 1 (or the conveyor 6) comprises an infeed belt 63, configured to feed the parisons 2 to the conveyor 6; in an embodiment, the belt 63 does not form part of the apparatus 1 but of the forming machine which forms the parisons 2. In the case where the conveyor 6 includes the carousel 61, the apparatus 1 also comprises a guide piece 62. The guide piece 62 is configured to guide the parisons 2 from the belt 63 onto the carousel 61; more specifically, the parisons 2 slide down onto the surface of the guide piece 62. The guide piece 62 feeds the parisons 2 onto a receiving zone of the carousel. The inspection zone 10 and the additional inspection zone 100 are located downstream of the receiving zone. These zones are at fixed positions and the carousel 61, as it rotates, moves the parisons 2 from the receiving zone to the inspection zone 10 and/or to the additional inspection zone 100. The illuminator 3 is positioned under the carousel 61 and the detector 4 is positioned above the carousel 61 at the illuminator 3. Similarly, the additional light source 310 is positioned under the carousel 61 and the additional camera 410 is positioned above the carousel 61 at the additional light source 310. A lower surface of the guide piece 62 acts as a stop for the parisons 2 which have moved all the way round the carousel 61 and which drop off the carousel 61 when they encounter the guide piece 62. The parisons 2 leave the carousel 61 at an exit zone. The apparatus 1 comprises a collection container 71 which is positioned under the carousel 61 at the exit zone where the parisons 2 leave the carousel 61 and which is configured to collect the inspected parisons 2. It should be noted that an additional conveyor belt may be provided in place of the collection container 71; thus, the collection container 71 may be positioned downstream of the additional conveyor belt.

In another embodiment, the parisons 2 are inspected at the exit of the conveyor 6; in this embodiment, the apparatus 1 comprises a chute 64 downstream of the infeed belt 63. The chute 64 is inclined so that the parisons 2 can slide down it by gravity, from a first end (at the infeed belt 63) to a second end, located at a vertical height lower than the first end. In this embodiment, the inspection zone 10 and the additional inspection zone 100 are defined along the chute 64. More specifically, the light source 31 (together with the emission-polarizing filter 32) is mounted under the chute 64, while the detector 4 is mounted above the chute 64, at the light source 31. Similarly, the additional light source 310 is positioned under the chute 64 and the additional camera 410 is positioned above the chute 64 at the additional light source 310. At the second end of the chute 64, the apparatus 1 comprises an additional conveyor belt 65 to receive the parisons 2 as they leave the chute. The additional conveyor belt 65 may, for example, be in the form of a Z type conveyor; the additional conveyor belt receives the parisons 2 from a first end and transports them to a second end. Preferably, the second end is positioned at a height above the first end. A collection container may be positioned at the second end. It should be noted that a collection container may be positioned directly in place of the additional belt 65 to receive the parisons 2 that drop off the chute 64.

In another embodiment, the apparatus 1 comprises a container (or drawer) 8, configured to receive the plurality of parisons 2. Each object 8 has an at least partly transparent bottom wall 81. In this embodiment, the parisons 2 are inspected when they are inside the container 8. In effect, the apparatus 1 may comprise an operating position (or station) for the container 8. This operating position may be defined, for example, by a workbench on which to rest the container 8. At that operating position, the illuminator 3 (that is, the light source 31 and the emission-polarizing filter 32) is located under the bottom wall 81 of the container 8 to illuminate the parisons 2 contained therein through the at least partly transparent bottom wall 81. It should be noted that, in an embodiment not illustrated, the emission-polarizing filter 32 is integrated in the bottom wall 81 of the container 8. The light source 31 may also be integrated in the bottom wall 81 of the container; in this case, at the operating position, the bottom wall is preferably connected to an electric power supply to power the light source 31.

The detector 4 (that is, the camera 41 and the emission-polarizing filter 32) is located above the bottom wall 81 of the container 8 to capture images of the plurality of parisons 2. It should be noted that, in an embodiment, the detector 4 might be positioned under the bottom wall 81, and the illuminator 3, above it. The bottom wall 81 might be smooth or, on an inside face of it (on which the parisons 2 rest) it might have elongate features or grooves, configured to urge the parisons 2 to be oriented along certain directions (the orientating action could be facilitated by shaking the container 8). In the latter case, the parisons 2 are received in the container 8 in unordered fashion but are subsequently (at least partly) ordered.

The container 8 may be positioned also at an additional operating position, where the parisons 2 are interposed between the additional light source 310 and the additional camera 410.

## Claims

1. An apparatus (1) for the inspection of parisons (2), comprising:
- an inspection zone (10), configured to receive an unordered plurality of parisons (2);
- an illuminator (3) including a light source (31) configured to emit a beam of light directed at the plurality of parisons (2) located in the inspection zone (10);
- a detector (4) comprising a camera (41) configured to capture an image of the plurality of parisons (2), located in the inspection zone (10), wherein the inspection zone is interposed between the illuminator (3) and the detector (4);
- a control unit (5) configured to process the image captured by the camera (41) to derive a diagnostic information regarding the defectiveness of one or more parisons (2) of the plurality of parisons (2),
**characterized in that** the illuminator (3) includes an emission-polarizing filter (32) configured to intercept the beam of light emitted by the light source (31) and to generate a polarized light beam, and **in that** the detector (4) includes a receiving polarizing filter (42) configured to receive the polarized light beam, so that the plurality of parisons (2), in the inspection zone (10), is operatively interposed between the emission-polarizing filter (32) and the receiving polarizing filter (42), wherein the emission-polarizing filter (32) is a circular polarizing filter.

2. The apparatus (1) according to claim 1, wherein the receiving polarizing filter (42) includes a first linear polarizing filter portion (421), having a first polarizing direction (D1) and a second linear polarizing filter portion (422), having a second polarizing direction (D2), different from the first polarizing direction (D1).

3. The apparatus (1) according to claim 2, wherein the receiving-polarizing filter (42) includes four linear polarizing filter portions (421, 422, 423, 424), having respective polarizing directions (D1, D2, D3, D4) angularly spaced at 45° from each other.

4. The apparatus (1) according to claim 2 or 3, wherein the receiving-polarizing filter (42) includes a plurality of units (420) and, for each unit (420) of the plurality of units (420), a respective plurality of linear polarizing filter portions (421, 422, 423, 424), each having a respective polarizing direction (D1, D2, D3, D4) which is different from the others, and wherein, for each linear polarizing filter portion (421, 422, 423, 424), the camera (41) includes a photoelectric converter section including a pair of photodiodes (411, 412).

5. The apparatus (1) according to any one of the preceding claims, wherein the image captured by the camera (41) depicts the plurality of parisons (2), and wherein the control unit (5) is configured to derive, from the captured image, a plurality of derived images, each representing a respective parison (2) of the plurality of parisons (2) and to process each derived image of the plurality of derived images in order to generate the diagnostic information.

6. The apparatus (1) according to any one of the preceding claims, comprising a conveyor (6), configured to receive the parisons (2) of the plurality of parisons (2) and to convey them to the inspection zone (10) in unordered fashion, wherein the conveyor (6) includes an at least partly transparent surface configured to supportably receive the plurality of parisons (2) and wherein the inspection zone (10) is defined along the conveyor (6).

7. The apparatus (1) according to claim 6, wherein the conveyor (6) includes a carousel (61) and wherein the carousel (61) includes a plate (611) defining the at least partly transparent surface, wherein the carousel (611) includes a rotary frame (612) and a plurality of at least partly transparent plates (611), connected to the frame (612) and defining the at least partly transparent surface.

8. The apparatus (1) according to claim 7, wherein the at least partly transparent plate (611) is interposed between the illuminator (3) and the detector (4), wherein the illuminator (3) is mounted under the carousel (61) and the detector (4) is mounted above the carousel (61), with respect to a vertical direction parallel to the weight force.

9. The apparatus (1) according to claim 7 or 8, wherein the illuminator (3) and the detector (4) are at stationary positions relative to the carousel (61).

10. The apparatus (1) according to any one of claims 1 to 5, comprising a container (8) having an at least partly transparent bottom (81), configured to receive the plurality of parisons (2), wherein the container (8) is positionable at an operating position between the detector (4) and the illuminator (3), wherein, at the operating position of the container (8), the plurality of parisons (2) is operatively interposed between the emission-polarizing filter (32) and the receiving polarizing filter (42).

11. The apparatus (1) according to any one of the preceding claims, comprising:
- an additional inspection zone (100), configured to receive the unordered plurality of parisons (2), upstream or downstream of the inspection zone (10);
- an additional light source (310) configured to emit a beam of light directed at the plurality of parisons (2) located in the additional inspection zone (100);
- an additional camera (410), configured to capture an additional image of the plurality of parisons (2) located in the additional inspection zone (100), wherein the plurality of parisons (2) in the additional inspection zone (100) is operatively positioned between the additional light source (310) and the additional camera (410),
wherein the control unit (5) is configured to process the additional image captured by the additional camera (410) to derive a diagnostic information regarding a colour quality of the one or more parisons (2).

12. A method for the inspection of parisons (2), comprising the following steps:
- receiving an unordered plurality of parisons (2) in an inspection zone (10);
- illuminating the parisons (2) of the plurality of parisons (2);
- capturing an image of the plurality of illuminated parisons (2) in the inspection zone (10), wherein the image is captured by a camera (41);
- processing the image captured by the camera (41) to derive a diagnostic information regarding the defectiveness of one or more parisons (2) of the plurality of parisons (2),
**characterized in that** the parisons (2) of the plurality of parisons (2) in the inspection zone (10) are illuminated with a beam of polarized light, wherein the emission-polarizing filter (32) is a circular polarizing filter.

13. The method according to claim 12, wherein the step of illuminating includes the following sub-steps:
- generating a beam of non-polarized light through a light source (31);
- intercepting the beam of light on an emission-polarizing filter (32), interposed between the light source (31) and the plurality of parisons (2), to generate the beam of polarized light;
- receiving the beam of polarized light on a receiving polarizing filter (42), interposed between the parison (2) and the camera (41),
wherein the plurality of parisons (2) in the inspection zone (10) is operatively interposed between the emission-polarizing filter (32) and the receiving polarizing filter (42), wherein:
- the emission-polarizing filter (32) is a circular polarizing filter;
- the receiving-polarizing filter (42) includes a plurality of linear polarizing filter portions (421, 422, 423, 424), each having a respective polarizing direction (D1, D2, D3, D4) which is different from the others.

14. The method according to claim 12 or 13, comprising a step of transporting the plurality of parisons (2) on a conveyor (6) having an at least partly transparent surface, wherein the inspection zone (10) is defined along the conveyor (6), so the parisons (2) are inspected while they are being transported by the conveyor (6).

15. The method according to any one of claims from 12 to 14, wherein, during inspection, the parisons (2) are transported along a curved path at a constant height.

## Patentansprüche

1. Einrichtung (1) zur Prüfung von Vorformlingen (2), umfassend:
- einen Prüfbereich (10), der ausgelegt ist, um eine ungeordnete Vielzahl von Vorformlingen (2) zu empfangen;
- einen Illuminator (3), einschließend eine Lichtquelle (31), die ausgelegt ist, um einen Lichtstrahl zu emittieren, der auf die Vielzahl von Vorformlingen (2) gerichtet ist, die sich in dem Prüfbereich (10) befindet;
- einen Detektor (4), der eine Kamera (41) umfasst, die dazu ausgelegt ist, ein Bild der Vielzahl von Vorformlingen (2) zu erfassen, die sich in dem Prüfbereich (10) befindet, wobei der Prüfbereich zwischen dem Illuminator (3) und dem Detektor (4) angeordnet ist;
- eine Steuereinheit (5), die dazu ausgelegt ist, das von der Kamera (41) erfasste Bild zu verarbeiten, um Diagnoseinformationen betreffend die Fehlerhaftigkeit eines oder mehrerer Vorformlinge (2) der Vielzahl von Vorformlingen (2) abzuleiten,
**dadurch gekennzeichnet, dass** der Illuminator (3) einen Emissionspolarisationsfilter (32) einschließt, der dazu ausgelegt ist, den von der Lichtquelle (31) emittierten Lichtstrahl abzufangen und einen polarisierten Lichtstrahl zu erzeugen, und dadurch, dass der Detektor (4) einen Empfangspolarisationsfilter (42) einschließt, der dazu ausgelegt ist, den polarisierten Lichtstrahl zu empfangen, so dass die Vielzahl von Vorformlingen (2) in dem Prüfbereich (10) betriebswirksam zwischen dem Emissionspolarisationsfilter (32) und dem Empfangspolarisationsfilter (42) angeordnet ist, wobei der Emissionspolarisationsfilter (32) ein kreisförmiger Polarisationsfilter ist.

2. Einrichtung (1) nach Anspruch 1, wobei der Empfangspolarisationsfilter (42) einen ersten linearen Polarisationsfilterabschnitt (421) mit einer ersten Polarisationsrichtung (D1) und einen zweiten linearen Polarisationsfilterabschnitt (422) mit einer zweiten Polarisationsrichtung (D2), die sich von der ersten Polarisationsrichtung (D1) unterscheidet, einschließt.

3. Einrichtung (1) nach Anspruch 2, wobei das Empfangspolarisationsfilter (42) vier lineare Polarisationsfilterabschnitte (421, 422, 423, 424) einschließt, die jeweilige Polarisationsrichtungen (D1, D2, D3, D4) aufweisen, die um 45° winkelig voneinander beabstandet sind.

4. Einrichtung (1) nach Anspruch 2 oder 3, wobei das Empfangspolarisationsfilter (42) eine Vielzahl von Einheiten (420) und für eine jede Einheit (420) der Vielzahl von Einheiten (420) eine jeweilige Vielzahl von linearen Polarisationsfilterabschnitten (421, 422, 423, 424) einschließt, die jeweils eine jeweilige Polarisationsrichtung (D1, D2, D3, D4) aufweisen, die sich von den anderen unterscheidet, und wobei für einen jeden linearen Polarisationsfilterabschnitt (421, 422, 423, 424) die Kamera (41) eine photoelektrische Wandlersektion einschließt, der ein Paar Fotodioden (411, 412) einschließt.

5. Einrichtung (1) nach einem der vorhergehenden Ansprüche, wobei das von der Kamera (41) erfasste Bild die Vielzahl von Vorformlingen (2) darstellt und wobei die Steuereinheit (5) ausgelegt ist, um aus dem erfassten Bild eine Vielzahl von abgeleiteten Bildern abzuleiten, die jeweils einen jeweiligen Vorformling (2) der Vielzahl von Vorformlingen (2) darstellen, und um ein jedes abgeleitete Bild der Vielzahl von abgeleiteten Bildern zu verarbeiten, um die Diagnoseinformationen zu erzeugen.

6. Einrichtung (1) nach einem der vorhergehenden Ansprüche, umfassend einen Förderer (6), der ausgelegt ist, um die Vorformlinge (2) der Vielzahl von Vorformlingen (2) zu empfangen und sie auf ungeordneter Weise zu dem Prüfbereich (10) zu befördern, wobei der Förderer (6) eine zumindest teilweise transparente Oberfläche einschließt, die ausgelegt ist, um die Vielzahl von Vorformlingen (2) stützbar zu empfangen, und wobei der Prüfbereich (10) entlang des Förderers (6) definiert ist.

7. Einrichtung (1) nach Anspruch 6, wobei der Förderer (6) ein Karussell (61) einschließt und wobei das Karussell (61) eine Platte (611) einschließt, die die zumindest teilweise transparente Oberfläche definiert, wobei das Karussell (611) einen Drehrahmen (612) und eine Vielzahl von zumindest teilweise transparenten Platten (611) einschließt, die mit dem Rahmen (612) verbunden sind und die zumindest teilweise transparente Oberfläche definieren.

8. Einrichtung (1) nach Anspruch 7, wobei die zumindest teilweise transparente Platte (611) zwischen dem Illuminator (3) und dem Detektor (4) angeordnet ist, wobei der Illuminator (3) unter dem Karussell (61) montiert ist und der Detektor (4) in Bezug auf eine vertikale Richtung parallel zur Gewichtskraft über dem Karussell (61) montiert ist.

9. Einrichtung (1) nach Anspruch 7 oder 8, wobei sich der Illuminator (3) und der Detektor (4) an stationären Positionen relativ zu dem Karussell (61) befinden.

10. Einrichtung (1) nach einem der Ansprüche 1 bis 5, umfassend einen Behälter (8) mit einem zumindest teilweise transparenten Boden (81), der ausgelegt ist, um die Vielzahl von Vorformlingen (2) zu empfangen, wobei der Behälter (8) in einer Betriebsposition zwischen dem Detektor (4) und dem Illuminator (3) positionierbar ist, wobei in der Betriebsposition des Behälters (8) die Vielzahl von Vorformlingen (2) betriebswirksam zwischen dem Emissionspolarisationsfilter (32) und dem Empfangspolarisationsfilter (42) angeordnet ist.

11. Einrichtung (1) nach einem der vorhergehenden Ansprüche, umfassend:
- einen zusätzlichen Prüfbereich (100), der ausgelegt ist, um die ungeordnete Vielzahl von Vorformlingen (2) stromaufwärts oder stromabwärts des Prüfbereichs (10) zu empfangen;
- eine zusätzliche Lichtquelle (310), die ausgelegt ist, um einen Lichtstrahl zu emittieren, der auf die Vielzahl von Vorformlingen (2) gerichtet ist, die sich im zusätzlichen Prüfbereich (100) befindet;
- eine zusätzliche Kamera (410), die ausgelegt ist, um ein zusätzliches Bild der Vielzahl von Vorformlingen (2) zu erfassen, die sich in dem zusätzlichen Prüfbereich (100) befindet, wobei die Vielzahl von Vorformlingen (2) in dem zusätzlichen Prüfbereich (100) betriebswirksam zwischen der zusätzlichen Lichtquelle (310) und der zusätzlichen Kamera (410) positioniert ist,
wobei die Steuereinheit (5) dazu ausgelegt ist, das von der zusätzlichen Kamera (410) erfasste zusätzliche Bild zu verarbeiten, um Diagnoseinformationen betreffend eine Farbqualität des einen oder der mehreren Vorformlinge (2) abzuleiten.

12. Verfahren zur Prüfung von Vorformlingen (2), umfassend die folgenden Schritte:
- Empfangen einer ungeordneten Vielzahl von Vorformlingen (2) in einem Prüfbereich (10);
- Beleuchten der Vorformlinge (2) der Vielzahl von Vorformlingen (2);
- Erfassen eines Bildes der Vielzahl von beleuchteten Vorformlingen (2) in dem Prüfbereich (10), wobei das Bild durch eine Kamera (41) erfasst wird;
- Verarbeiten des von der Kamera (41) erfassten Bildes, um Diagnoseinformationen betreffend die Fehlerhaftigkeit eines oder mehrerer Vorformlinge (2) der Vielzahl von Vorformlingen (2) abzuleiten,
**dadurch gekennzeichnet, dass** die Vorformlinge (2) der Vielzahl von Vorformlingen (2) in dem Prüfbereich (10) mit einem Strahl polarisierten Lichts beleuchtet werden, wobei der Emissionspolarisationsfilter (32) ein kreisförmiger Polarisationsfilter ist.

13. Verfahren nach Anspruch 12, wobei der Schritt zum Beleuchten die folgenden Teilschritte einschließt:
- Erzeugen eines Strahls nicht polarisierten Lichts durch eine Lichtquelle (31);
- Abfangen des Lichtstrahls auf einem Emissionspolarisationsfilter (32), der zwischen der Lichtquelle (31) und der Vielzahl von Vorformlingen (2) angeordnet ist, um den Strahl polarisierten Lichts zu erzeugen;
- Empfangen des polarisierten Lichtstrahls auf einem Empfangspolarisationsfilter (42), der zwischen dem Vorformling (2) und der Kamera (41) angeordnet ist, wobei die Vielzahl von Vorformlingen (2) in dem Prüfbereich (10) betriebswirksam zwischen dem Emissionspolarisationsfilter (32) und dem Empfangspolarisationsfilter (42) angeordnet ist, wobei:
- der Emissionspolarisationsfilter (32) ein kreisförmiger Polarisationsfilter ist;
- der Empfangspolarisationsfilter (42) eine Vielzahl von linearen Polarisationsfilterabschnitten (421, 422, 423, 424) einschließt, die jeweils einen jeweiligen Polarisationsrichtung (D1, D2, D3, D4) aufweisen, die sich von den anderen unterscheidet.

14. Verfahren nach Anspruch 12 oder 13, umfassend einen Schritt zum Transportieren der Vielzahl von Vorformlingen (2) auf einem Förderer (6) mit einer zumindest teilweise transparenten Oberfläche, wobei der Prüfbereich (10) entlang des Förderers (6) definiert ist, so dass die Vorformlinge (2) geprüft werden, während sie vom Förderer (6) transportiert werden.

15. Verfahren nach einem der Ansprüche 12 bis 14, wobei die Vorformlinge (2) während der Prüfung entlang einer gekrümmten Bahn in konstanter Höhe transportiert werden.

## Revendications

1. Appareil (1) pour l'inspection de préformes (2), comprenant :
- une zone d'inspection (10) configurée pour recevoir une pluralité de préformes (2) non ordonnées ;
- un illuminateur (3) incluant une source lumineuse (31) configurée pour émettre un faisceau de lumière dirigé vers la pluralité de préformes (2) situées dans la zone d'inspection (10) ;
- un détecteur (4) comprenant une caméra (41) configurée pour capturer une image de la pluralité de préformes (2), situées dans la zone d'inspection (10), dans lequel la zone d'inspection est interposée entre l'illuminateur (3) et le détecteur (4) ;
- une unité de contrôle (5) configurée pour traiter l'image capturée par la caméra (41) afin de déduire des informations de diagnostic concernant la défectuosité d'une ou plusieurs préformes (2) de la pluralité de préformes (2),
**caractérisé en ce que** l'illuminateur (3) inclut un filtre polarisant d'émission (32) configuré pour intercepter le faisceau de lumière émis par la source lumineuse (31) et pour générer un faisceau lumineux polarisé, et **en ce que** le détecteur (4) inclut un filtre polarisant de réception (42) configuré pour recevoir le faisceau lumineux polarisé, de sorte que la pluralité de préformes (2), dans la zone d'inspection (10), est interposée fonctionnellement entre le filtre polarisant d'émission (32) et le filtre polarisant de réception (42), dans lequel le filtre polarisant d'émission (32) est un filtre polarisant circulaire.

2. Appareil (1) selon la revendication 1, dans lequel le filtre polarisant de réception (42) inclut une première partie de filtre polarisant linéaire (421), comportant une première direction de polarisation (D1) et une deuxième partie de filtre polarisant linéaire (422), comportant une deuxième direction de polarisation (D2), différente de la première direction de polarisation (D1) .

3. Appareil (1) selon la revendication 2, dans lequel le filtre polarisant de réception (42) inclut quatre parties de filtre polarisant linéaire (421, 422, 423, 424), comportant des directions de polarisation (D1, D2, D3, D4) respectives espacées angulairement de 45° les unes des autres.

4. Appareil (1) selon la revendication 2 ou 3, dans lequel le filtre polarisant de réception (42) inclut une pluralité d'unités (420) et, pour chaque unité (420) de la pluralité d'unités (420), une pluralité respective de parties de filtre polarisant linéaire (421, 422, 423, 424), comportant chacune une direction de polarisation (D1, D2, D3, D4) respective, étant différente des autres, et dans lequel pour chaque partie de filtre polarisant linéaire (421, 422, 423, 424), la caméra (41) inclut une section de convertisseur photoélectrique incluant une paire de photodiodes (411, 412).

5. Appareil (1) selon l'une quelconque des revendications précédentes, dans lequel l'image capturée par la caméra (41) représente la pluralité de préformes (2), et dans lequel l'unité de contrôle (5) est configurée pour déduire, à partir de l'image capturée, une pluralité d'images déduites, chacune représentant une préforme (2) respective de la pluralité de préformes (2) et pour traiter chaque image déduites de la pluralité d'images déduites afin de générer les informations de diagnostic.

6. Appareil (1) selon l'une quelconque des revendications précédentes, comprenant un convoyeur (6), configuré pour recevoir les préformes (2) de la pluralité de préformes (2) et pour les acheminer vers la zone d'inspection (10) de manière non ordonnée, dans lequel le convoyeur (6) inclut une surface au moins partiellement transparente configurée pour recevoir en support la pluralité de préformes (2) et dans lequel la zone d'inspection (10) est définie le long du convoyeur (6) .

7. Appareil (1) selon la revendication 6, dans lequel le convoyeur (6) inclut un carrousel (61) et dans lequel le carrousel (61) inclut une plaque (611) définissant ladite au moins une surface partiellement transparente, dans lequel le carrousel (611) inclut un cadre rotatif (612) et une pluralité de plaques (611) au moins partiellement transparentes, reliées au cadre (612) et définissant ladite surface au moins partiellement transparente.

8. Appareil (1) selon la revendication 7, dans lequel ladite plaque (611) au moins partiellement transparente est interposée entre l'illuminateur (3) et le détecteur (4), dans lequel l'illuminateur (3) est monté sous le carrousel (61) et le détecteur (4) est monté au-dessus du carrousel (61), par rapport à une direction verticale parallèle à la force massique.

9. Appareil (1) selon la revendication 7 ou 8, dans lequel l'illuminateur (3) et le détecteur (4) sont à des positions stationnaires par rapport au carrousel (61).

10. Appareil (1) selon l'une quelconque des revendications 1 à 5, comprenant un récipient (8) comportant un fond au moins partiellement transparent (81), configuré pour recevoir la pluralité de préformes (2), dans lequel le récipient (8) peut être placé à une position de fonctionnement entre le détecteur (4) et l'illuminateur (3), dans lequel, à la position de fonctionnement du récipient (8), la pluralité de préformes (2) est interposée de manière fonctionnelle entre le filtre polarisant d'émission (32) et le filtre polarisant de réception (42).

11. Appareil (1) selon l'une quelconque des revendications précédentes, comprenant :
- une zone d'inspection supplémentaire (100), configurée pour recevoir la pluralité de préformes (2) non ordonnées, en amont ou en aval de la zone d'inspection (10) ;
- une source lumineuse supplémentaire (310) configurée pour émettre un faisceau de lumière dirigé vers la pluralité de préformes (2) situées dans la zone d'inspection supplémentaire (100) ;
- une caméra supplémentaire (410), configurée pour capturer une image supplémentaire de la pluralité de préformes (2) situées dans la zone d'inspection supplémentaire (100), dans lequel la pluralité de préformes (2) dans la zone d'inspection supplémentaire (100) est positionnée de manière fonctionnelle entre la source lumineuse supplémentaire (310) et la caméra supplémentaire (410),
dans lequel l'unité de contrôle (5) est configurée pour traiter l'image supplémentaire capturée par la caméra supplémentaire (410) afin de déduire des informations de diagnostic concernant une qualité de couleur d'une ou de plusieurs préformes (2).

12. Procédé d'inspection de préformes (2), comprenant les étapes suivantes :
- recevoir une pluralité de préformes (2) non ordonnées dans une zone d'inspection (10) ;
- illuminer les préformes (2) de la pluralité de préformes (2) ;
- capturer une image de la pluralité de préformes (2) illuminées dans la zone d'inspection (10), dans lequel l'image est capturée par une caméra (41) ;
- traiter l'image capturée par la caméra (41) pour déduire des informations de diagnostic concernant la défectuosité d'une ou de plusieurs préformes (2) de la pluralité de préformes (2),
**caractérisé en ce que** les préformes (2) de la pluralité de préformes (2) dans la zone d'inspection (10) sont illuminées par un faisceau de lumière polarisée,
dans lequel le filtre polarisant d'émission (32) est un filtre polarisant circulaire.

13. Procédé selon la revendication 12, dans lequel l'étape d'illumination inclut les sous-étapes suivantes :
- générer un faisceau de lumière non polarisée par l'intermédiaire d'une source lumineuse (31) ;
- intercepter le faisceau de lumière sur un filtre polarisant d'émission (32), interposé entre la source lumineuse (31) et la pluralité de préformes (2), pour générer le faisceau de lumière polarisée ;
- recevoir le faisceau de lumière polarisée sur un filtre polarisant de réception (42), interposé entre la préforme (2) et la caméra (41),
dans lequel la pluralité de préformes (2) dans la zone d'inspection (10) est interposée fonctionnellement entre le filtre polarisant d'émission (32) et le filtre polarisant de réception (42), dans lequel :
- le filtre polarisant d'émission (32) est un filtre polarisant circulaire ;
- le filtre polarisant récepteur (42) inclut une pluralité de parties de filtre polarisant linéaire (421, 422, 423, 424), chacune comportant une direction de polarisation (D1, D2, D3, D4) respective étant différente de celle des autres.

14. Procédé selon la revendication 12 ou 13, comprenant une étape de transport de la pluralité de préformes (2) sur un convoyeur (6) comportant une surface au moins partiellement transparente, dans lequel la zone d'inspection (10) est définie le long du convoyeur (6), de sorte que les préformes (2) sont inspectées pendant qu'elles sont transportées par le convoyeur (6).

15. Procédé selon l'une quelconque des revendications 12 à 14, dans lequel, les préformes (2) sont transportées le long d'une trajectoire incurvée à une hauteur constante, pendant l'inspection.
